# EUROPÄISCHE PATENTSCHRIFT

(11) **EP 1 066 174 B1**
(45) Veröffentlichungstag und Bekanntmachung des Hinweises auf die Patenterteilung: **16.01.2002**
(21) Anmeldenummer: 99913245.9
(22) Anmeldetag: 09.03.1999
(51) Int. Cl.: B60R 16/02, B60R 21/00

(54) **INSASSENSCHUTZSYSTEM MIT EINER ZENTRALEINHEIT, SENSOREN UND MEHREREN MITTELS EINES BUS-SYSTEMS KOMMUNIKATIONSFÄHIG VERBUNDENEN STEUERMODULEN ZUR AUSLÖSUNG VON INSASSENSCHUTZEINRICHTUNGEN**
OCCUPANT PROTECTION SYSTEM HAVING A CENTRAL UNIT, SENSORS AND A PLURALITY OF CONTROL MODULES WHICH ARE CONNECTED BY MEANS OF A BUS SYSTEM SO THAT THEY CAN COMMUNICATE AND WHICH ARE PROVIDED FOR TRIGGERING OCCUPANT PROTECTION DEVICES
SYSTEME DE PROTECTION DES OCCUPANTS COMPORTANT UNE UNITE CENTRALE, DES DETECTEURS ET PLUSIEURS MODULES DE COMMANDE RELIES PAR UN SYSTEME DE BUS DE MANIERE A POUVOIR COMMUNIQUER, SERVANT A DECLENCHER DES DISPOSITIFS DE PROTECTION DES OCCUPANTS

(30) Priorität: 28.03.1998 DE 19813957
(43) Veröffentlichungstag der Anmeldung: 10.01.2001
(73) Patentinhaber: Conti Temic microelectronic GmbH, 90411 Nürnberg (DE); ROBERT BOSCH GMBH, 70442 Stuttgart (DE)
(72) Erfinder: FENDT, Günter, D-86529 Schrobenhausen (DE); BISCHOFF, Michael, D-85111 Adelschlag (DE); RINKENS, Johannes, D-85055 Ingolstadt (DE); SCHÄFFER, Stefan, D-86529 Schrobenhausen (DE); STEINER, Peter, D-86529 Schrobenhausen (DE); NITSCHKE, Werner, D-71254 Ditzingen (DE); KARL, Otto, D-71229 Leonberg (DE); BAUER, Joachim, D-71720 Oberstenfeld (DE)
(74) Vertreter: Kolb, Georg
(86) Internationale Anmeldenummer: EP9901502
(87) Internationale Veröffentlichungsnummer: WO9950096

(56) Entgegenhaltungen:
- EP-A- 0 693 401
- WO-A-89/09146
- DE-A- 19 619 117
- DE-C- 19 527 813

## Beschreibung

Die Erfindung betrifft ein Insassenschutzsystem mit einer Zentraleinheit, Sensoren und mehreren mittels eines BUS-Systems kommunikationsfähig verbundenen Steuermodulen zur Auslösung von Insassenschutzeinrichtungen, insbesondere in Kraftfahrzeugen gemäß dem Oberbegriff des Anspruchs 1.

Derartige Insassenschutzsysteme sind beispielsweise aus der DE 196 53 794 oder DE 196 16 293 zu entnehmen. Darin wird auch die bidirektionale Datenübertragung zur Diagnose der Steuermodule beschrieben, bei der vorzugsweise von der Zentraleinheit eine Steuerinformation, im folgenden als Diagnoseanfrage bezeichnet, an die Steuermodule gesendet wird und diese darauf mit einer Kontrollinformation bzw. Diagnoseantwort antworten. Dieser Diagnosebetrieb dient zur zyklischen Überprüfung der Funktionsfähigkeit und einzelner Funktionsparameter der Steuermodule der Insassenschutzeinrichtungen.

Die für Insassenschutzsysteme charakteristischen Sensoren, bspw. die Beschleunigungssensoren, die zukünftig ergänzt werden durch Sitzbelegungs- und Positionssensoren, Gurtschloßsensoren, Näherungssensoren ect. wurden bisher immer separat und einzeln mit der Zentraleinheit verbunden. Diese senden üblicherweise kontinuierlich und einseitig Sensorsignale an die Zentraleinheit. Der Aufwand für die Verdrahtung und Steuerung in der Zentraleinheit sowie die Anzahl der Eingänge der Zentraleinheit nimmt dabei immer mehr zu. im Artikel von Herrn Bischoff: "Vernetzte Rückhaltesysteme", Automobil-Produktion Juni 1997, Heft 3/97, S. 84 f. wurden bereits Sensoren in einem BUS-System zur Auslösung von Insassenschutzeinrichtungen, einem sogenannten Zündbus, ansatzweise beschrieben, wobei die Art und Weise der Einbindung in das BUS-System nicht entnommen werden kann.

So weist auch die WO 89/09146 gerade voneinander getrennt einerseits einen Sensordatenbus und andererseits einen Aktuatordatenbus auf.

Darüber hinaus ist beispielsweise der DE 195 27 813 C1 ein Rückhaltemittel für Insassen zu entnehmen, bei dem ein der Zündeinrichtung integrierter beschleunigungsabhängiger Sicherheitsschalter vorgesehen ist. Die zentrale Auswerteeinrichtung kann auf die Daten dieses Sensor jedoch nicht zugreifen und daher auch nicht für die Auslöseentscheidung der anderen Rückhaltemittel berücksichtigen. Bei der für die Schutzeinrichtung vorgesehenen Diagnoseabfrage wird nur die Funktionsfähigkeit an die Zentraleinheit zurückgemeldet.

Sensoren mit universeller Bedeutung für das Auslöseverhalten des gesamten Insassenschutzsystems können somit nicht so integriert werden. Es müssen daher immer weitere Sensoren vorgesehen sein, die kommunikationsfähig mit der Zentraleinheit verbunden sind.

Aufgabe der Erfindung ist es, ein Insassenschutzsystem vorzustellen, bei dem der Verdrahtungsaufwand mit einfachen Mitteln durch Einbindung der Sensoren reduziert werden kann.

Diese Aufgabe wird durch die kennzeichnenden Merkmale des Patentanspruchs 1 gelöst. Vorteilhafte Weiterbildungen sind den Unteransprüchen zu entnehmen.

Grundgedanke der Erfindung ist es, neben den Steuermodulen der Insassenschutzeinrichtungen auch die der Sensoren über dieses BUS-System miteinander sowie mit der Zentraleinheit zu verbinden und so den Verdrahtungsaufwand deutlich zu verringern. Dies ist um so mehr vorteilhaft, als daß die Sensoren meist räumlich im Fahrzeug über nicht unwesentliche Strecken entfernt von der Zentraleinheit verteilt sind, jedoch in einer Vielzahl von Fällen gerade in diesen Bereichen auch Insassenschutzeinrichtungen räumlich angeordnet sind. Zum Teil werden diese bereits zu sogenannten ausgelagerten Assistenten zusammengefaßt. Dann sind die Sensoren jedoch nicht mehr (direkt) mit der Zentraleinheit verbunden. Unter Ausnutzung gerade des bisher zur Diagnose der Steuermodule der Insassenschutzeinrichtungen eingesetzten bidirektionalen Dialogs ist es äußerst einfach möglich, zumindest bestimmte einzelne Sensoren über dieses BUS-System an die Zentraleinheit anzubinden, indem den Sensoren entsprechende Steuermodule zugeordnet werden, die auf die Diagnoseanfrage hin den aktuellen Sensorwert als Diagnoseantwort zurücksenden. Der besondere Vorteil besteht hier außerdem darin, daß nahezu identische Steuermodule wie die für die Insassenschutzeinrichtungen verwendet werden können und zusätzlich das softwaretechnische Übertragungsprotokoll nahezu unverändert bleiben kann, da für dieses quasi einzig die Anzahl der Steuermodule steigt, der Dialog jedoch äußerlich zunächst identisch ist.

Indem man neben der Zentraleinheit, wie bisher üblich, auch die Steuermodule der Insassenschutzeinrichtungen mit Mitteln versieht, die eine Erfassung der als Diagnoseantwort auf das BUS-System übertragenen Sensorsignale ermöglichen, kann Prozessorlogikaufwand von der Zentraleinheit auf die einzelnen Steuermodule verteilt werden, wodurch sich deren Reaktionsmöglichkeiten erhöhen.

Zur Einbindung von Sensoren in das BUS-System eines Insassenschutzsystems ist jedoch eine zykliche Erfassung der zu sensierenden Größe erforderlich. Die Zykluswiederholzeitdauer, also die Zeitdauer zwischen zwei Diagnose- bzw. Abfragezyklen für das Steuermodul eines Sensors ist aufgrund der immer begrenzten Datenübertragungsgeschwindigkeit dabei zu berücksichtigen. Eine Vielzahl von Steuermodulen führt bspw. beim sequenziellen Zeitmultiplex zu einer höheren Anzahl von Zeitfenstern innerhalb eines Protokollrahmens und einer daher nicht immer vernachlässigbar langen Zykluswiederholzeitdauer.

Einige der für das Insassenschutzsystem wichtigen zu sensierenden Größen weisen dabei eine hohe Dynamik, also eine hohe zeitliche Änderungsgeschwindigkeit auf. So sind bspw. die Beschleunigungssignale sehr dynamisch. Insassenschutzsysteme sind aufgrund der kurzen Zeitspanne zwischen erstem erkennbaren Sensorsignal und dem Zeitpunkt, in dem die Insassenschutzeinrichtungen ausgelöst werden müssen, um noch optimal zur Wirkung zu kommen, jedoch auch besonders zeitkritisch.

Es kann daher vorteilhaft sein, nur die Sensoren über Steuermodule in das BUS-System einzubinden, deren zu sensierende Größe sich in bezug auf die kürzestmögliche Zykluswiederholzeitdauer relativ langsam oder bspw. im Ruhezustand bei stehendem Fahrzeug ändert.

Durch eine entsprechend der Änderungsgeschwindigkeit der zu sensierenden Größe angepaßte Zykluswiederholzeitdauer ist selbstverständlich ebenso eine Erfassung aller Änderungen gewährieistbar. Dies ist im Einzelfall anhand der konkreten technischen Gegebenhelten zu prüfen.

Eine weitere vorteilhafte weiterbildung ist es, die Diagnoseabfrage und/ oder -antwort von Steuermodulen zumindest einzeiner sensoren zu unterbinden, wenn bereits eine einen sicherheitskritischen Zustand anzeigende Steuerinformation, insbesondere ein Auslösebefehl an wenigstens eines der Steuermodule gesandt wurde.

Die Erfindung wird nachfolgend anhand von Ausführungsbeispielen und Figuren näher erläutert.

Kurze Beschreibung der Figuren:
- Figur 1: Bussystem mit Steuermodulen zur Auslösung von Insassenschutzeinrichtungen und für Sensoren
- Figur 2: Übertragungsprotokoll mit Broadcast-Diagnoseabfrage und symmetrischem Zeitmultiplex der einzelnen Steuermodule
- Figur 3: Übertragungsprotokoll mit Broadcast-Diagnoseabfrage und asymmetrischem Zeitmultiplex, bei dem das Steuermodul des Sensors in jedem zweiten Zeitfenster antwortet

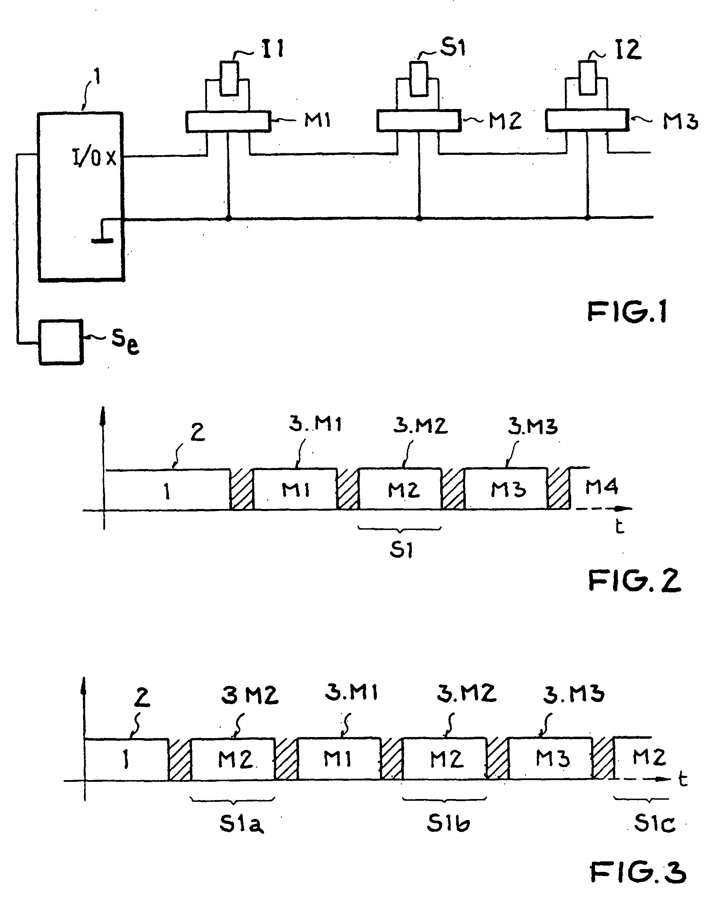

Figur 1 zeigt ein Insassenschutzsystem mit einer Zentraleinheit 1, Sensoren sₑ und s1 und mehreren mittels eines BUS-Systems über einen der I/O-Ports I/O x der Zentraleinheit 1 kommunikationsfähig verbundenen Steuermodulen M1,M3 ff. zur Auslösung von Insassenschutzeinrichtungen I1, I3 ff.

Der Sensor sₑ ist wie herkömmlich separat mit der Zentraleinheit 1 verbunden, da dieser Sensor sₑ sich sehr schnell ändernde Größen, bspw. die auf das Fahrzeug wirkende Beschleunigung analog erfaßt. Um eine quasi Echtzeitverarbeitung des Signals zu gewährleisten, wurde dieser Sensor nicht in das Bussystem integiert.

Der Sensor s1, bspw. ein Gurtschloßsensor, ändert hingegen seinen Zustand langsamer bzw. in einem nicht sicherheitskritischen Zeitbereich, bspw. bei stehendem Fahrzeug. Dieser Sensor S1 wird über das Steuermodul M2 in das Bussystem integriert. Die Steuermodule M1 ff. sind vorzugsweise alle identisch aufgebaut und werden für ihre Funktion softwaremäßig programmiert.

Aus den Figuren 2 und 3 kann die Einbindung der Sensoren in den Prozeß aus Diagnoseanfrage und Diagnoseantwort besonders gut nachvollzogen werden. In beiden Figuren wird die Diagnoseanfrage 2 der Zentraleinheit 1 als Broadcastanfrage dargestellt, also an alle Steuermoduel M1 ff. gemeinsam. Dadurch verkürzt sich ncohmals die Protokollzyklusdauer. Grundsätzlich ist aber auch eine individuelle Diagnoseanfrage über die Adresse der Steuermodule möglich.

Auf die Diagnoseanfrage 2 hin antworten die Steuermodule Mx mit ihrer jeweiligen Diagnoseantwort 3.Mx. Während dies für die Steuermodule M1,M3 ff. der Insassenschutzeinrichtungen I1, I2 ff. vornehmlcih nur eine Statusinformation, bspw. defekt/nicht defekt, ist, wird vom Steuermodul M2 als Diagnoseantwort 3.M2 ein aktueller Sensorwert des Sensors s1 auf die Diagnoseanfrage 2 hin auf das BUS-System gesendet. Diese Diagnoseantwort 3.M2 kann neben der Zentraleinheit 1 auch in den einzelnen Steuermodulen M1,M3 ff. der Insassenschutzeinrichtungen I1, I2 ff. erkannt und berücksichtigt und ggfs. in diesen Aktionen ausgelöst werden. Nach der Diagnoseantwort 3.M2 antworten in Figur 2 zunächst noch alle anderen Steuermodule M3 ff., bis nach einer erneuten Diagnoseanfrage 2 der Zentraleinheit 1 hin der Prozeß wiederholt wird.

Im Gegensatz dazu sieht der Prozeß in Figur 3 einen asymmetrischen Zeitmultiplex auf dem BUS-System vor. Zwischen den Diagnoseantworten 3.M1, 3.M3 ff. der Steuermodule M1,M3 ff. der Insassenschutzeinrichtungen I1, I2 ff. wird jedes Mal vom Steuermodul M2 ein aktueller Sensorwert s1a, s1b, s1c u.s.w. des Sensors s1 auf das BUS-System gesendet. Das Steuermodul des Sensors s1 antwortet also im Vergleich zu den Steuermodule M1,M3 ff. der Insassenschutzelnrichtungen I1, I2 ff. viel häufiger. Die Zentraleinheit 1 sowie eventuell auch die Steuermodule M1,M3 ff. der Insassenschutzeinrichtungen I1, I2 ff. erhalten daher viel schneller einen sich ändernden Sensorwert s1 übermittelt

## Patentansprüche

1. Insassenschutzsystem mit einer Zentraleinheit (1), Sensoren (sₑ,s1) und mehreren mittels eines BUS-Systems kommunikationsfähig verbundenen Steuermodulen (M1,M3,...) zur Auslösung von Insassenschutzeinrichtungen (I1,I2,...), insbesondere in Kraftfahrzeugen, bei dem die Steuermodule (M,x) auf eine Diagnoseanfrage (2) der Zentraleinheit (1) hin eine Diagnoseantwort (3.Mx) an das BUS-System übergeben,
**dadurch gekennzeichnet, daß**
a) Im BUS-System wenigstens ein weiteres steuermodul (M2) vorgesehen ist, welches mit wenigstens einem der Sensoren (s1) zur Erfassung dessen Sensorsignals verbunden ist und
b) dieses Steuermodul (M2) auf die Diagnoseanfrage (2) hin in Form der Diagnoseantwort (3.M2) das aktuelle Sensorsignal an das BUS-System übergibt.

2. Insassenschutzsystem nach Anspruch 1, **dadurch gekennzeichnet, daß** in den steuermodulen (M1,M3,...) der Insassenschutzeinrichtungen (I1,I2,..) Mittel vorgesehen sind, mit denen das in Form der Diagnoseantwort (3.M2) an das Bus-System übergebene aktuelle Sensorsignal von den Steuermodulen (M1,M3,...) der Insassenschutzeinrichtungen (I1,I2,..) ausgewertet wird.

3. Insassenschutzsystem nach einem der vorangehenden Ansprüche,
**dadurch gekennzeichnet, daß**
a) die Erfassung des sensorsignals in Form der Diagnoseanfrage an das jeweilige Steuermodul zyklisch mit einer Zykluswiederholzeitdauer durchgeführt wird und
b) nur diejenigen Sensoren des Insassenschutzsystems mit einem Steuermodul am Bus-System angeschlossen sind, deren Sensorsignal eine gegenüber der Zykluswiederholzeitdauer zeitlich geringe Änderungsgeschwindigkeit aufweisen.

4. Insassenschutzsystem nach Anspruch 3, **dadurch gekennzeichnet, daß** im Bus-System nur solche Sensoren vorgesehen sind, die sich im allgemeinen langsam und vorzugsweise im Ruhezustand eines Kraftfahrzeuges ändern, insbesondere Sitzbelegungsschaltsensoren und/oder Gurtschloßsensoren.

5. Insassenschutzsystem nach Anspruch 1 oder 2, **dadurch gekennzeichnet, daß**
a) die Erfassung des Sensorsignals in Form der Diagnoseanfrage an das jeweilige Steuermodul zyklisch mit einer Zykluswiederholzeitdauer durchgeführt wird,
b) die kurz ist gegenüber der zeitlichen Änderungsgeschwindigkeit des Sensorsignals.

6. Insassenschutzsystem nach einem der vorangehenden Ansprüche, **dadurch gekennzeichnet, daß** die Diagnoseabfrage durch die Zentraleinheit und/oder Diagnoseantwort von den Steuermodulen zumindest einzelner Sensoren unterbleibt, wenn von der Zentraleinheit eine einen sicherheitskritischen Zustand anzeigende Steuerinformation, insbesondere ein Auslösebefehl, an wenigstens eines der Steuermodule einer der Insassenschutzeinrichtungen gesandt wurde.

## Claims

1. An occupant protection system for triggering occupant protection devices (I1, I2, ...) especially in motor vehicles, said system incorporating a central unit (1), sensors (sₑ, s1) and a plurality of control modules (M1, M3, ...) that are interconnected by means of a BUS system for communications purposes, and wherein the control modules (M.x) transmit a diagnostic reply (3.Mx) to the BUS system in response to a diagnostic query (2) from the central unit (1), **characterised in that**
a) there is provided at least one further control module (M2) in the BUS system, said further control module being connected to at least one of the sensors (s1) for capturing the sensor signals therefrom and
b) said further control module (M2) transmitting the actual sensor signal in the form of the diagnostic reply (3.M2) to the BUS system in response to the diagnostic query (2).

2. An occupant protection system in accordance with Claim 1, **characterised in that** means are provided in the control modules (M1, M3, ...) of the occupant protection devices (I1, I2, ...) for evaluating the actual sensor signal from the control modules (M1, M3, ...) of the occupant protection devices (I1, I2, ...) that was transmitted to the BUS system in the form of the diagnostic reply (3.M2).

3. An occupant protection system in accordance with any of the preceding Claims, **characterised in that**
a) the process of capturing the sensor signal in the form of the diagnostic query to the respective control module is carried out cyclically in a cycle repetition period and
b) only those sensors of the occupant protection system are connected to a control module in the BUS system of which the sensor signal has a low speed of alteration relative to the cycle repetition period.

4. An occupant protection system in accordance with Claim 3, **characterised in that** there are provided in the BUS system only such sensors as generally alter slowly and preferably in the non-operative state of a motor vehicle, in particular, seat-occupancy switch sensors and/or seat belt fastener sensors.

5. An occupant protection system in accordance with Claim 1 or 2, **characterised in that**
a) the process of capturing the sensor signal in the form of the diagnostic query to the respective control module is carried out cyclically in a cycle repetition period,
b) which is short relative to the temporal speed of alteration of the sensor signal.

6. An occupant protection system in accordance with any of the preceding Claims, **characterised in that** the diagnostic query by the central unit and/or the diagnostic reply from the control modules is omitted for at least certain sensors if an item of control information indicating a safety-critical condition and especially a triggering command has been sent by the central unit to at least one of the control modules for one of the occupant protection devices.

## Revendications

1. Système de protection de passagers équipé d'une unité centrale (1), de capteurs (sₑ, s1) et de plusieurs modules de commande (M1, M3,...) reliés de façon à pouvoir communiquer au moyen d'un système de BUS en vue du déclenchement de dispositifs de protection de passagers (I1, I2, ...), en particulier dans des véhicules, dans lequel les modules de commande (M.x) délivrent sur une question de diagnostic (2) de l'unité centrale (1) une réponse de diagnostic (3.Mx) au système de BUS, **caractérisé en ce que**
a) dans le système de BUS au moins un autre module de commande (M2) est prévu, qui est relié à au moins un des capteurs (s1) en vue de la saisie du signal de capteur de celui-ci et
b) ce signal de commande (M2) délivre en réponse à la question de diagnostic (2) sous la forme de la réponse de diagnostic (3.M2) le signal réel de capteur au système de BUS.

2. Système de protection de passagers selon la revendication 1, **caractérisé en ce que** dans les modules de commande (M1, M3, ...) des dispositifs de protection de passagers (I1, I2,...) des moyens sont prévus avec lesquels le signal de capteur réel délivré sous la forme de la réponse de diagnostic (3.M2) au système de BUS des modules de commande (M1, M3,...) des dispositifs de protection de passagers (I1, I2,...), est évalué.

3. Système de protection de passagers selon l'une des revendications précédentes, **caractérisé en ce que**
a) la saisie du signal de capteur sous la forme de la demande de diagnostic au module de commande respectif, est effectuée cycliquement avec une durée de répétition de cycle et
b) seuls ces capteurs du système de protection de passagers sont reliés par un module de commande au système de BUS dont le signal de capteur présente une vitesse de variation temporelle très faible par rapport à la durée de répétition de cycle.

4. Système de protection de passagers selon la revendication 3, **caractérisé en ce que** dans le système de BUS seuls sont prévus des capteurs qui se modifient en général lentement et à l'arrêt d'un véhicule, en particulier des capteurs de commutation d'occupation de sièges et/ou des capteurs de bouclage de ceinture.

5. Système de protection de passagers selon la revendication 1 ou 2, **caractérisé en ce que**
a) la saisie du signal de capteur sous la forme de la demande de diagnostic au module de commande respectif est effectuée cycliquement avec une durée de répétition de cycle,
b) qui est courte vis-à-vis de la vitesse de variation dans le temps du signal de capteur.

6. Système de protection de passagers selon l'une des revendications précédentes, **caractérisé en ce que** la réponse de diagnostic par l'unité centrale et/ou la réponse de diagnostic des modules de commande n'a pas lieu au moins dans certains capteurs, lorsqu'une information de commande de l'unité centrale indiquant un état critique pour la sécurité, en particulier un ordre de déclenchement, a été émise au moins par un des modules de commande d'un des dispositifs de protection de passagers.
